# FASCICULE DE BREVET EUROPEEN

(11) **EP 3 385 124 B1**
(45) Date de publication et mention de la délivrance du brevet: **11.03.2020**
(21) Numéro de dépôt: 18164017.8
(22) Date de dépôt: 26.03.2018
(51) Int. Cl.: B60R 11/02, B60R 11/00

(54) **SUPPORT DE TABLETTE TACTILE SUR UNE PLANCHE DE BORD D'UN VÉHICULE AUTOMOBILE**
HALTERUNG FÜR BERÜHRUNGSEMPFINDLICHES TABLET AUF EINEM ARMATURENBRETT EINES KRAFTFAHRZEUGS
MOUNTING FOR TOUCHSCREEN TABLET ON A MOTOR VEHICLE DASHBOARD

(30) Priorité: 05.04.2017 FR 1752959
(43) Date de publication de la demande: 10.10.2018
(73) Titulaire: RENAULT s.a.s., 92100 Boulogne-Billancourt (FR)
(72) Inventeur: CORRE, Jean-Marie, 78770 THOIRY (FR); OUDENARD, Laurent, 73800 LES MARCHES (FR)

(56) Documents cités:
- DE-A1-102006 051 037
- FR-A1- 3 021 931
- FR-A3- 2 928 594
- JP-A- H09 150 680
- JP-A- 2014 090 246
- US-A1- 2009 174 209

## Description

### Domaine de l'invention :

La présente invention concerne un support de tablette tactile ou de téléphone intelligent (en anglais « smartphone »). Par commodité on utilisera uniquement le terme « tablette » dans l'ensemble du texte qui suit pour désigner indifféremment tout équipement multimédia ayant un format plat.

### Etat de la technique :

Les véhicules automobiles proposent de plus en plus de solutions techniques permettant de maintenir une tablette tactile dans l'habitacle, à la façon d'un chevalet, de façon que le conducteur ou le passager visualise la tablette sans la tenir. La tablette est par exemple installée dans un logement de la planche de bord du véhicule afin de compléter l'équipement propre du véhicule. Le support est généralement un appendice saillant et inesthétique sur la planche de bord du véhicule, et ceci d'autant plus qu'aucune tablette n'est installée. On connait également des supports de tablette pliables ou escamotables, mais qui requièrent des manipulations peu pratiques et sont mécaniquement fragiles. Une autre problématique pour un tel support de tablette est d'assurer la sûreté du système lors d'un choc du véhicule déclenchant un sac gonflable passager (en anglais « airbag »), qui peut entrer en conflit avec la tablette et engendrer une projection dans l'habitacle susceptible de présenter un danger pour les occupants du véhicule. Le document FR 3 021 931 divulgue un support de tablette conforme au préambule de la revendication 1.

### But de l'invention :

L'invention a pour but de pallier tout ou partie des inconvénients précédents en proposant un support de tablette tactile qui soit d'une utilisation simple et intuitive, tout en offrant une esthétique optimale pour la planche de bord, que la tablette soit présente ou non.

### Objet de l'invention :

A cet effet, l'invention a pour objet un support de tablette tactile, comprenant les caractéristiques de la revendication 1.

Le support selon l'invention forme de ce fait un chevalet amovible. L'obturateur préserve l'esthétique de la surface extérieure de la structure, typiquement la planche de bord du véhicule, tant lorsque la tablette est installée dans son logement que lorsque le logement est vide. L'obturateur en position de fermeture supprime toute concavité, c'est-à-dire forme une continuité de surface avec la peau extérieure de la structure, ce qui permet d'offrir une forme simple et épurée sous les yeux du conducteur ou du passager. De plus l'installation est des plus intuitives puisqu'il suffit de pousser l'obturateur, soit manuellement, soit sous la contrainte du bord inférieur de la tablette pour le pousser dans logement et permettre l'installation de la tablette.

Le logement de la tablette est situé dans une zone supérieure de la planche de bord du véhicule, le sac gonflable étant positionné en dessous du support de manière à protéger le passager avant de tout contact avec cette tablette.

Selon d'autres caractéristiques de l'invention :
- l'obturateur dans sa position d'ouverture du logement est enfoncé à l'encontre d'un moyen de rappel, tandis que l'obturateur dans la position de fermeture du logement est relâché sous l'influence du moyen de rappel, jusqu'à présenter une de ses faces en continuité de surface avec les rebords inférieur et supérieur ;
- l'obturateur coopère avec des moyens de butée et d'arrêt aptes à le maintenir dans la position d'ouverture ou de fermeture du logement ;
- le support comprend des moyens de calage situés dans le logement conformés pour plaquer le bord inférieur de la tablette contre le rebord inférieur de la peau extérieure de la structure ; avec les rebords supérieur et inférieur de la peau extérieure de la structure ;

L'invention a également pour objet un élément intérieur de l'habitacle d'un véhicule automobile, en particulier une planche de bord et/ou une console centrale d'un véhicule automobile, cet élément intérieur comprenant un support selon la revendication 1.

L'invention a encore pour objet une planche de bord et/ou une console centrale d'un véhicule automobile, comprenant un support selon la revendication 1 et étant situé dans une zone supérieure de la planche de bord, au-dessus du sac gonflable passager.

### Exposé de l'invention :

L'invention sera mieux comprise à la lecture de la description suivante d'un exemple non limitatif de l'invention, et à la lumière des dessins annexés sur lesquels :
- les figures 1 et 2 représentent une vue en perspective du support selon l'invention, intégré à une planche de bord d'un véhicule automobile, respectivement en l'absence et en présence d'une tablette tactile ;
- les figures 3 à 5 représentent une vue en section transversale du support des figure 1 et 2 dans plusieurs configurations d'utilisation ;
- la figure 6 est une vue en perspective d'un support ne correspondant pas à l'invention ;
- les figures 7 à 9 représentent une vue en section transversale du support de la figure 6 dans plusieurs configurations d'utilisation,
- la figure 10 représente un autre mode de réalisation de l'invention, dans laquelle le support peut être prévu en partie avant et/ou arrière de console centrale du véhicule.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.

Sauf indication contraire, les notions avant-arrière s'entendent par rapport au sens de marche normal du véhicule qui est dirigé vers l'avant.

Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admis dans le cadre de l'invention.

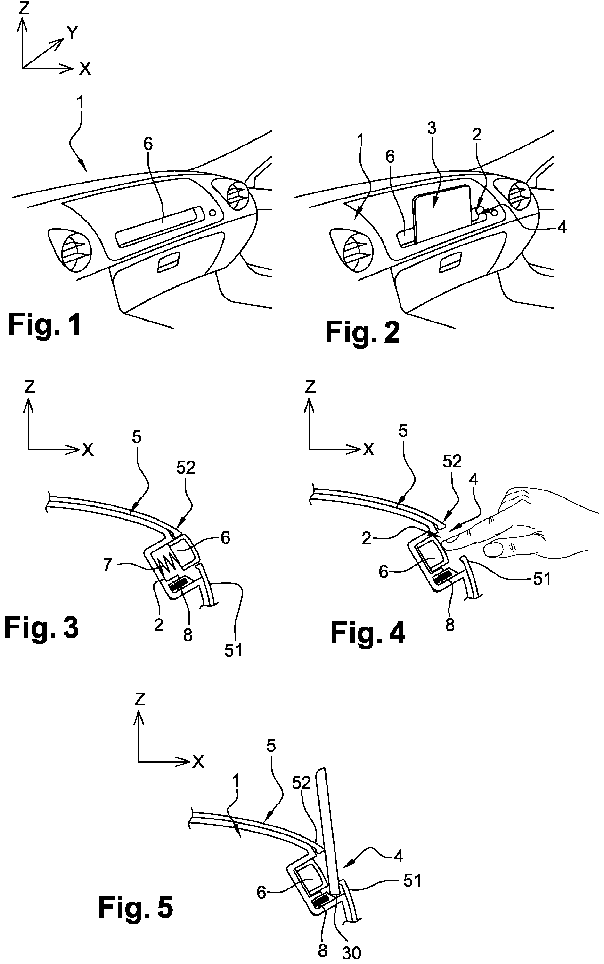

On a représenté aux figures 1 à 5 un mode de réalisation d'un support de tablette selon l'invention. La figure 1 illustre une planche de bord d'un véhicule, limitée à la zone passager (ici pour un véhicule ayant un volant de direction à gauche). Cette planche de bord comporte un sac gonflable passager (non représenté). Dans une zone supérieure de la planche de bord, localisée au-dessus du sac gonflable passager est situé un support de tablette tactile selon l'invention.

Le support de tablette tactile comprend une structure 1 dans laquelle est ménagé un logement 2 de réception d'un bord inférieur 30 de la tablette 3. Dans le cas présent, la structure est la zone fixe et dans le voisinage immédiat de la planche de bord sur laquelle est formé le logement de réception de la tablette.

Le bord inférieur de la tablette peut correspondre à n'importe quel côté de la tablette selon la disposition et l'orientation choisie pour l'utilisation de la tablette. Comme indiqué précédemment, le terme « tablette » employé par commodité s'entend comme tout appareil multimédia ayant une forme plate et s'étend également aux téléphones intelligents (« smartphone » en anglais). L'épaisseur de la tablette 3 est typiquement inférieure à 10 mm.

Le logement 2 débouche à l'extérieur de la structure 1, en direction du passager, donc vers l'arrière du véhicule, au travers d'une fente 4 délimitée par des rebords inférieur 51 et supérieur 52 d'une peau extérieure 5 de la structure 1. La fente 4 est essentiellement dirigée suivant une direction transversale Y au véhicule.

Le support comporte un obturateur 6 mobile entre une position de fermeture du logement 2 et une position d'ouverture du logement 2.

Le rebord inférieur 51 est saillant par rapport au logement 2 de façon à constituer un élément de retenue du bord inférieur 30 de la tablette 3. Ce rebord inférieur 51 est saillant de l'ordre de 2 à 5 mm en direction du rebord supérieur 52. Le rebord supérieur 52 est saillant par rapport au logement 2 de façon à constituer une zone d'appui pour la face arrière de la tablette 3. La face arrière de la tablette 3 s'entend ici comme la face tournée vers l'avant du véhicule.

Selon l'invention, l'obturateur 6 est déplaçable en translation dans le logement 2. Dans sa position d'ouverture, l'obturateur 6 est enfoncé à l'encontre d'un moyen de rappel 7. Dans la position de fermeture, l'obturateur est relâché sous l'influence du moyen de rappel 7, jusqu'à présenter une face extérieure 61 en continuité de surface avec les rebords inférieur 51 et supérieur 52. L'obturateur 6 a la forme générale d'une baguette, sa direction longitudinale s'étendant sensiblement suivant la direction transversale Y du véhicule. La forme de l'obturateur 6 est complémentaire de celle de la fente 4 de façon à s'insérer étroitement dans celle-ci dans la position de fermeture. L'obturateur 6 coopère avec des moyens de butée et d'arrêt (non représentés) aptes à le maintenir sélectivement dans la position d'ouverture ou de fermeture du logement 2.

Le support comprend en outre des moyens de calage 8 situés dans le logement 2 conformés pour plaquer sans l'agresser le bord inférieur 30 de la tablette 3 contre le rebord inférieur 51. Ces moyens de calage 8 peuvent être montés sur ressort pour repousser naturellement le bord inférieur 30 de la tablette en direction du rebord inférieur 51, ce qui tend à redresser la tablette 3 de façon que sa face arrière soit bien en appui contre le rebord supérieur 52 et évite son basculement en dehors du logement 2.

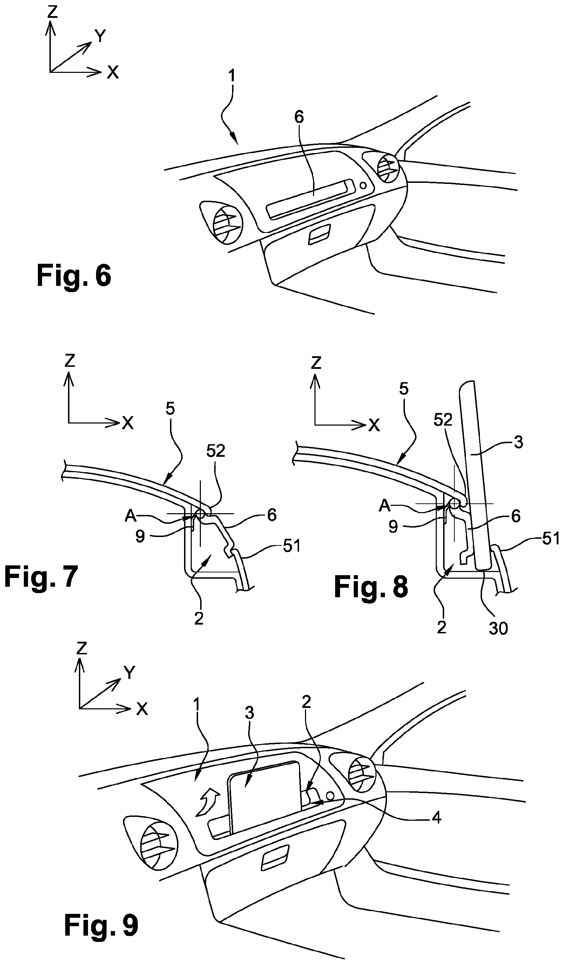

Les rebords inférieur 51 et supérieur 52 sont agencés de sorte qu'avec une tablette 3 ayant une épaisseur de l'ordre de 5 mm, l'inclinaison de la tablette 3 par rapport à la verticale a un angle inférieur à 45°. Cet angle peut être de l'ordre de 10° comme illustré sur la figure 8, mais peut dans des variantes de réalisation non représentées de l'invention être de l'ordre de 20°, ou même 30° à 40°.

On note que selon l'invention, l'obturateur 6 n'est pas nécessairement au contact de la tablette lorsqu'il est dans sa position d'ouverture, ce qui évite d'éventuelle rayures.

On a représenté aux figures 6 à 9 un support de tablette ne correspondant pas à l'invention dont il diffère par les caractéristiques qui sont décrites ci-après.

Selon ce mode de réalisation, l'obturateur 6 est monté pivotant sur la structure 1 autour d'un axe d'articulation A adjacent au rebord supérieur 52 de la peau extérieure 5 de la structure 1.

Un moyen de rappel 9 est interposé entre l'obturateur 6 et la structure 1, pour le placer naturellement dans la position de fermeture du logement 2, dans laquelle l'obturateur 6 présente une face en continuité de surface avec les rebords supérieur 52 et inférieur 51 de la peau extérieure 5 de la structure 1.

Dans ce mode de réalisation, l'obturateur 6 est enfoncé par un appui direct du bord inférieur 30 de la tablette 3. La tablette se trouve de préférence coincée entre l'obturateur, qui sert alors de moyen de calage, et le rebord inférieur 51 de la peau extérieure 5 de la structure 1.

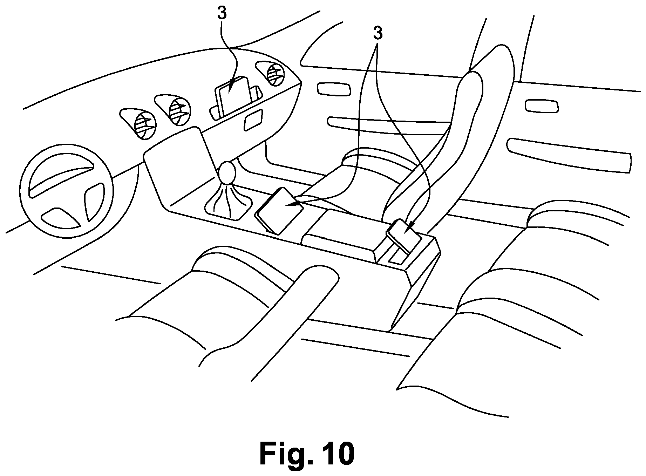

Dans un mode de réalisation de l'invention représenté à la figure 10, la structure dans laquelle est prévu le support de tablette selon l'invention peut être une console entre sièges. Ce support peut être prévu dans une partie avant de console avec un angle d'inclinaison supérieur à l'angle de 10° déjà évoqué, par exemple 30/40°, ou en partie arrière de la console pour les occupants de la seconde rangée d'assises, en particulier pour le passager central qui ne bénéficie pas d'un écran en face de lui ou pour partager l'image pour les occupants aux trois places de la seconde rangée d'assises.

Bien entendu, l'invention n'est pas limitée aux modes ou variantes de réalisation décrits précédemment et comprends tous les équivalents techniques de ces moyens.

## Revendications

1. Support de tablette (3) tactile, comprenant une structure (1) dans laquelle est ménagé un logement (2) de réception d'un bord inférieur (30) de la tablette (3), le logement (2) débouchant à l'extérieur de la structure (1) au travers d'une fente (4) délimitée par des rebords inférieur (51) et supérieur (52) d'une peau extérieure (5) de la structure (1), et comporte un obturateur (6) mobile entre une position de fermeture du logement (2) et une position d'ouverture du logement (2), l'obturateur étant déplaçable en translation dans le logement (2), l'obturateur en position de fermeture présentant une face extérieure (61) en continuité de surface avec les rebords inférieur (51) et supérieur (52), **caractérisé en ce que** l'obturateur (6) a la forme générale d'une baguette s'étendant sensiblement suivant la direction transversale (Y) du véhicule, ayant une forme complémentaire à celle de la fente (4), le rebord inférieur (51) étant en outre saillant par rapport au logement (2) de façon à constituer un élément de retenue du bord inférieur (30) de la tablette (3), tandis que le rebord supérieur (52) est saillant par rapport au logement (2) de façon à constituer une zone d'appui pour la face arrière de la tablette (3).

2. Support selon la revendication 1, **caractérisé en ce que** l'obturateur (6) dans sa position d'ouverture du logement (2) est enfoncé à l'encontre d'un moyen de rappel (7), tandis que l'obturateur (6) dans la position de fermeture du logement (2) est relâché sous l'influence du moyen de rappel (7), jusqu'à présenter une de ses faces en continuité de surface avec les rebords inférieur (51) et supérieur (52).

3. Support selon l'une quelconque des revendications précédentes, **caractérisé en ce que** l'obturateur (6) coopère avec des moyens de butée et d'arrêt aptes à le maintenir dans la position d'ouverture ou de fermeture du logement (2).

4. Support selon la revendication 3, **caractérisé en ce qu'**il comprend des moyens de calage (8) situés dans le logement (2) conformés pour plaquer le bord inférieur (30) de la tablette (3) contre le rebord inférieur (51) de la peau extérieure (5) de la structure (1).

5. Elément intérieur de l'habitacle d'un véhicule automobile, en particulier une planche de bord et/ou une console centrale d'un véhicule automobile, **caractérisé en ce qu'**il comprend un support selon l'une quelconque des revendications précédentes.

6. Planche de bord d'un véhicule automobile et/ou console centrale d'un véhicule, **caractérisé en ce qu'**elle comprend un support selon l'une quelconque des revendications précédentes, le support étant situé dans une zone supérieure de la planche de bord, au-dessus du sac gonflable passager.

## Patentansprüche

1. Halterung für ein berührungsempfindliches Tablet (3), umfassend eine Struktur (1), in der eine Aufnahme (2) zum Aufnehmen einer Unterkante (30) des Tablets (3) ausgebildet ist, wobei die Aufnahme (2) an der Außenseite der Struktur (1) durch einen Spalt (4) mündet, der durch einen unteren (51) und einen oberen Rand (52) der Außenhaut (5) der Struktur (1) begrenzt wird, und eine Blende (6) beinhaltet, die zwischen einer Geschlossenstellung der Aufnahme (2) und einer Offenstellung der Aufnahme (2) beweglich ist, wobei die Blende in der Aufnahme (2) translatorisch verlagerbar ist, wobei die Blende in der Geschlossenstellung eine Außenseite (61) aufweist, die flächenbündig mit den unteren (51) und oberen (52) Rändern ist, **dadurch gekennzeichnet, dass** die Blende (6) die Grundform einer Leiste hat, die sich im Wesentlichen entlang einer Querrichtung (Y) des Fahrzeugs erstreckt und eine komplementär zu der des Spalts (4) ausgebildete Form hat, wobei der untere Rand (51) ferner in Bezug auf die Aufnahme (2) so übersteht, dass er ein Rückhalteelement für die Unterkante (30) des Tablets (3) bildet, während der obere Rand (52) in Bezug auf die Aufnahme (2) so übersteht, dass er einen Anlagebereich für die Rückseite des Tablets (3) bildet.

2. Halterung nach Anspruch 1, **dadurch gekennzeichnet, dass** die Blende (6) in ihrer Offenstellung der Aufnahme (2) gegen eine Rückstelleinrichtung (7) eingedrückt ist, während die Blende (6) in der Geschlossenstellung der Aufnahme (2) unter dem Einfluss der Rückstelleinrichtung (7) freigegeben wird, bis eine ihrer Seiten flächenbündig mit den unteren (51) und oberen (52) Rändern ist.

3. Halterung nach einem der vorhergehenden Ansprüche, **dadurch gekennzeichnet, dass** die Blende (6) mit Anschlag- und Sperreinrichtungen zusammenwirkt, die geeignet sind, sie in der Offen- oder Geschlossenstellung der Aufnahme (2) zu halten.

4. Halterung nach Anspruch 3, **dadurch gekennzeichnet, dass** sie Klemmeinrichtungen (8) umfasst, die in der Aufnahme (2) gelegen sind und dazu ausgebildet sind, die Unterkante (30) des Tablets (3) gegen den unteren Rand (51) der Außenhaut (5) der Struktur (1) zu drücken.

5. Innenelement der Fahrgastzelle eines Kraftfahrzeugs, insbesondere ein Armaturenbrett und/oder eine Mittelkonsole eines Kraftfahrzeugs, **dadurch gekennzeichnet, dass** es eine Halterung nach einem der vorhergehenden Ansprüche umfasst.

6. Armaturenbrett eines Kraftfahrzeugs und/oder Mittelkonsole eines Fahrzeugs, **dadurch gekennzeichnet, dass** es bzw. sie eine Halterung nach einem der vorhergehenden Ansprüche umfasst, wobei die Halterung in einem oberen Bereich des Armaturenbretts oberhalb des Beifahrer-Airbags gelegen ist.

## Claims

1. Support for a touchpad (3), comprising a structure (1) in which there is a formed a housing (2) for receiving a lower edge (30) of the touchpad (3), the housing (2) opening to the outside of the structure (1) through a slot (4) delimited by lower (51) and upper (52) borders of an outer skin (5) of the structure (1), and comprising a shutter (6) which can move between a position of closing the housing (2) and a position of opening the housing (2), the shutter being movable translationally in the housing (2), the shutter, in the closing position, having an outer face (61) in surface continuity with the lower (51) and upper (52) borders, **characterized in that** the shutter (6) has the general shape of a rod extending substantially in the transverse direction (Y) of the vehicle, having a shape complementary with that of the slot (4), the lower border (51) additionally projecting with respect to the housing (2) so as to constitute an element for retaining the lower edge (30) of the touchpad (3), whereas the upper border (52) projects with respect to the housing (2) so as to constitute a bearing region for the rear face of the touchpad (3).

2. Support according to Claim 1, **characterized in that** the shutter (6), in its position of opening the housing (2), is pushed in against a return means (7), whereas the shutter (6), in the position of closing the housing (2), is relaxed under the influence of the return means (7) until having one of its faces in surface continuity with the lower (51) and upper (52) borders.

3. Support according to either one of the preceding claims, **characterized in that** the shutter (6) cooperates with stop and arresting means able to retain it in the position of opening or closing the housing (2).

4. Support according to Claim 3, **characterized in that** it comprises wedging means (8) situated in the housing (2) that are configured to press the lower edge (30) of the touchpad (3) against the lower border (51) of the outer skin (5) of the structure (1).

5. Interior element of the cabin of a motor vehicle, in particular a dashboard and/or a central console of a motor vehicle, **characterized in that** it comprises a support according to any one of the preceding claims.

6. Dashboard of a motor vehicle and/or central console of a vehicle, **characterized in that** it comprises a support according to any one of the preceding claims, the support being situated in an upper region of the dashboard, above the passenger airbag.
